# EUROPÄISCHE PATENTSCHRIFT

(11) **EP 1 088 384 B1**
(45) Veröffentlichungstag und Bekanntmachung des Hinweises auf die Patenterteilung: **25.06.2003**
(21) Anmeldenummer: 00916797.4
(22) Anmeldetag: 03.03.2000
(51) Int. Cl.: H02K 7/116, H02K 15/00, F16H 55/22

(54) **VERFAHREN ZUR ANBRINGUNG EINER SCHNECKE AN EINER ANKERWELLE EINES ANKERS EINES ELEKTROMOTORS UND MIT DEM VERFAHREN HERGESTELLTER ANKER**
METHOD FOR FITTING A WORM TO AN ARMATURE SHAFT OF AN ARMATURE OF AN ELECTROMOTOR AND ARMATURE PRODUCED ACCORDING TO THIS METHOD
PROCEDE PERMETTANT D'ATTACHER UNE VIS SANS FIN SUR UN ARBRE D'INDUIT D'UN MOTEUR ELECTRIQUE ET INDUIT PRODUIT SELON CE PROCEDE

(30) Priorität: 15.04.1999 DE 19916998
(43) Veröffentlichungstag der Anmeldung: 04.04.2001
(73) Patentinhaber: ROBERT BOSCH GMBH, 70442 Stuttgart (DE)
(72) Erfinder: FAUTH, Lothar, D-77815 Bühl (DE)
(86) Internationale Anmeldenummer: DE0000685
(87) Internationale Veröffentlichungsnummer: WO00064032

(56) Entgegenhaltungen:
- EP-A- 0 712 197
- WO-A-98/10971
- DE-A- 4 125 491
- FR-A- 2 565 043
- US-A- 3 866 486
- US-A- 5 056 213

## Beschreibung

### Stand der Technik

Die Erfindung betrifft ein Verfahren zur Anbringung einer Schnecke an einer Ankerwelle eines Ankers eines Elektromotors sowie einen mit dem Verfahren hergestellten Anker, wie dies beispielsweise aus der FR-A-2565043 oder US-A-3866486 bekannt ist. Die dort beschriebenen Anker weisen eine Schnecke auf, die mit der Ankerwelle einstückig ist, wobei die Schnecke einen größeren Außendurchmesser als die Ankerwelle auf ihrer übrigen Länge aufweist.

Ferner ist es bekannt, eine Schnecke durch Umformen, insbesondere durch Walzen einer Ankerwelle eines Elektromotors einstückig mit der Ankerwelle herzustellen. Anschließend wird der Anker aus seinen Einzelteilen zusammengebaut, es werden also beispielsweise ein Ankerblechpaket, ein Kommutator und Lager auf die Ankerwelle aufgesetzt. Das Ankerblechpaket kann bereits mit Ankerwicklungen versehen sein, wenn es auf die Ankerwelle aufgesetzt wird oder die Ankerwicklungen werden auf das auf die Ankerwelle aufgesetzte Ankerblechpaket gewickelt. Um die Einzelteile des Ankers auf die Ankerwelle aufsetzen zu können, darf ein Außendurchmesser der durch Umformen an der Ankerwelle hergestellten Schnecke nicht größer als ein Durchmesser der Ankerwelle auf der übrigen Länge der Ankerwelle sein. Dies hat den Nachteil, dass eine Ankerwelle mit großem Durchmesser notwendig ist oder die Schnecke einen kleinen Durchmesser aufweist, der eine Tragkraft und eine Gewindesteigung der Schnecke begrenzt.

Eine andere Möglichkeit besteht darin, die Schnecke als separates Teil herzustellen, auf die Ankerwelle aufzusetzen und drehfest mit der Ankerwelle zu verbinden. Dies hat den Nachteil des größeren Aufwandes und es kann ein Fluchtungsfehler zwischen Ankerwelle und Schnecke bestehen.

### Vorteile der Erfindung

Beim erfindungsgemäßen Verfahren mit den Merkmalen des Anspruchs 1 wird zunächst der Anker aus seinen Einzelteilen zusammengebaut, es werden also beispielsweise das Ankerblechpaket, der Kommutator und Gleit- und/oder Wälzlager auf die Ankerwelle aufgesetzt und anschließend wird die Schnecke durch Umformen der Ankerwelle hergestellt. Auf diese Weise ist es möglich, die Schnecke mit einem größeren Durchmesser herzustellen als die Ankerwelle im übrigen, da die Einzelteile des Ankers nicht über die Schnecke hinweg auf die Ankerwelle aufgesetzt werden müssen. Zum Umformen kann die Ankerwelle an ihren Lagern oder Lagerstellen aufgenommen werden. Die Erfindung hat den Vorteil, daß eine einfache und kostengünstige Ankerwelle ohne Stufungen verwendet werden kann, d.h. die Ankerwelle läßt sich aus einem Stab, der keinerlei Querschnittsänderung über seine gesamte Länge aufweist, also beispielsweise aus preiswertem Stangenmaterial herstellen. Des weiteren ermöglicht die Erfindung einen kleinen Durchmesser der Ankerwelle, wodurch sich die Baugröße und das Gewicht des Ankers und damit Baugröße und Gewicht des gesamten Elektromotors verringern. Durch das verringerte Gewicht und den verringerten Durchmesser des Ankers ist dessen Rotations-Trägheitsmoment verkleinert und dadurch ein Anlaufverhalten des Elektromotors verbessert. Durch ihren größeren Kerndurchmesser weist die erfindungsgemäß hergestellte Schnecke eine höhere Festigkeit auf. Durch die einstückige Herstellung der Schnecke mit der Ankerwelle ist ein Fluchtungsfehler klein.

Die Unteransprüche haben vorteilhafte Ausgestaltungen und Weiterbildungen der im Hauptanspruch angegebenen Erfindung zum Gegenstand.

Vorzugsweise wird die Schnecke gemäß Anspruch 2 durch Walzen hergestellt.

Gemäß Anspruch 3 wird vor der Herstellung der Schnecke ein rohrförmiger Lagersitz zwischen auf die Ankerwelle aufgesetzten Ankerteilen, also beispielsweise dem Ankerblechpaket und dem Kommutator, und der noch herzustellenden Schnecke angebracht Der rohrförmige Lagersitz kann beispielsweise auf die Ankerwelle aufgepreßt oder aufgeschrumpft werden, wobei letzteres meint, daß der Lagersitz erwärmt und dadurch im Durchmesser vergrößert und infolgedessen leichtgängig auf die Ankerwelle aufgeschoben wird, auf der er nach Abkühlung drehfest und unverschieblich sitzt. Durch den Lagersitz ist es möglich, den Durchmesser der Ankerwelle im Bereich des Lagers auf mindestens den Außendurchmesser der Schnecke zu erweitern, ohne hierfür eine gestufte Ankerwelle verwenden zu müssen. Der größere Durchmesser am Lagersitz der Ankerwelle ermöglicht das Anbringen eines Wellenlagers nach Herstellung der Schnecke durch Umformen. Dies hat den Vorteil, daß ein beim Formen der Schnecke verwendeter Kühlschmierstoff oder beim Formen der Schnecke entstehende Schmutzpartikel nicht in das Wellenlager gelangen, und daß der Anker nach dem Formen der Schnecke problemlos beispielsweise auch mit einer Spüllösung gereinigt werden kann.

Gemäß Anspruch 4 wird das zwischen dem Ankerbiechpaket und dem Kommutator einerseits und der Schnecke andererseits angeordnete Lager unmittelbar ohne einen separaten Lagersitz und vor dem Formen der Schnecke auf die Ankerwelle aufgesetzt. Dies hat den Vorteil, daß ein separater Lagersitz und dessen Montage eingespart werden, und daß alle auf die Ankerwelle aufzusetzenden Teile vor dem Formen der Schnecke auf die Ankerwelle aufgesetzt werden. Die Herstellung des Ankers endet mit der Formung der Schnecke und es muß nicht nachträglich noch das Lager auf die Welle aufgesetzt werden.

Gemäß eines zweiten Aspektes der Erfindung ein Anker der nach dem obergenannten verfahren hergestellt wurde, weist die Merkmale des Anspruchs 5 auf.

### Zeichnung

Die Erfindung wird nachfolgend anhand zweier in der Zeichnung dargestellter Ausführungsbeispiele näher erläutert. Die beiden Figuren zeigen zwei erfindungsgemäß hergestellte Anker im Halbschnitt.

### Beschreibung des Ausführungsbeispiels

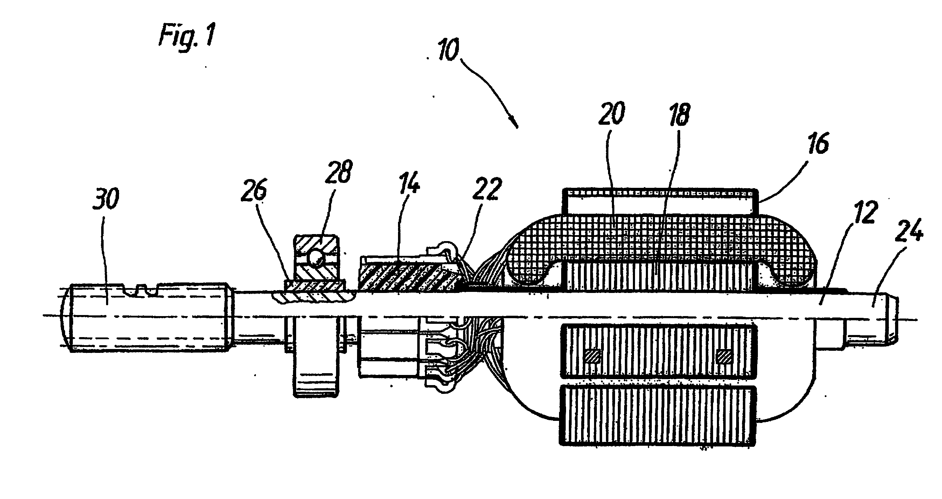

Der in Figur 1 dargestellte, erfindungsgemäß hergestellte Anker 10 weist eine Ankerwelle 12 auf, die aus einem zylindrischen Material, das keine Durchmesserund Querschnittsänderungen über seine Länge aufweist, hergestellt ist Die Ankerwelle 12 kann beispielsweise von zylindrischem Stangenmaterial abgetrennt sein. Auf die Ankerwelle 12 werden erfindungsgemäß zunächst Einzelteile des Ankers 10, im dargestellten Ausführungsbeispiel ein Kommutator 14 sowie ein mit Kunststoff 16 umspritztes Ankerblechpaket 18 drehfest aufgesetzt. Das Ankerblechpaket 18 trägt Ankerwicklungen 20, die vor oder nach dem Aufsetzen des Ankerblechpakets 18 auf die Ankerwelle 12 auf das Ankerblechpaket 18 gewickelt werden. Enden 22 der Ankerwicklungen 20 sind in an sich bekannter Weise am Kommutator 14 kontaktiert

Auf einer dem Kommutator 14 abgewandten Seite des Ankerblechpakets 18 steht die Ankerwelle 12 ein kurzes Stück aus dem Ankerblechpaket 18 und den Ankerwicklungen 20 vor. Dieses Ende der Ankerwelle 12 bildet einen Lagersitz 24 für ein nicht dargestelltes Gleitlager. Auf der anderen Seite steht die Ankerwelle 12 um eine größere Länge aus dem Kommutator 14 vor. Auf dieser Seite ist ein rohrförmiger Lagersitz 26 für ein Wälzlager 28 oder ein nicht dargestelltes Gleitlager drehfest und axial unverschieblich auf die Ankerwelle 12 aufgepreßt oder aufgeschrumpft Nach dem Anbringen des Kommutators 14, des Ankerblechpakets 18 mit den Ankerwicklungen 20 und des Lagersitzes 26 auf die Ankerwelle 12 wird deren aus dem Lagersitz 26 vorstehendes Ende durch Walzen zu einer Schnecke 30 geformt. Beim Walzen der Schnecke 30 kann der Anker 10 an seinen beiden Lagersitzen 24, 26 gelagert werden. Die Schnecke 30 hat einen größeren Außendurchmesser als die Ankerwelle 12 auf ihrer übrigen Länge außerhalb der Schnecke 30. Durch die Formung der Schnecke 30 nach dem Anbringen des Ankerblechpakets 18 mit den Ankerwicklungen 20 und dem Kommutator 14 auf der Ankerwelle 12 kann die Schnecke 30 mit einem größeren Durchmesser als die Ankerwelle 12 auf Ihrer übrigen Länge hergestellt werden, da die genannten Teile 18, 20, 14 des Ankers 10 nicht über die Schnecke 30 geschoben werden müssen.

Der zwischen dem Kommutator 14 und der Schnecke 30 auf die Ankerwelle 12 aufgesetzte Lagersitz 26 weist einen mindestens ebenso großen Außendurchmesser wie die Schnecke 30 auf, so daß das Kugellager 28 oder ein nicht dargestelltes Gleitlager nach dem Walzen der Schnecke 30 und einem eventuellen Reinigen des Ankers auf den Lagersitz 26 aufgesetzt werden kann.

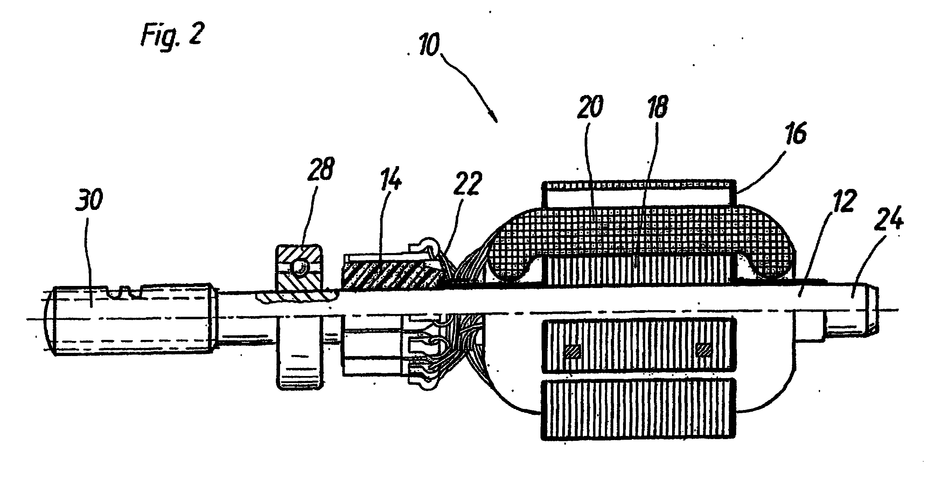

Bei dem In Figur 2 dargestellten Anker ist der zwischen dem Kommutator 14 und der Schnecke 30 angeordnete Lagersitz 26 weggelassen, das Kugellager 28 oder das nicht dargestellte Gleitlager wird direkt und vor dem Walzen der Schnecke 30 auf die Ankerwelle 12 aufgesetzt. Das Kugellager 28 oder das nicht dargestellte Gleitlager können zur Lagerung des Ankers 10 beim Walzen der Schnecke 30 verwendet werden. Das Kugel- oder Gleitlager 28 wird erforderlichenfalls zum Walzen der Schnecke 30 abgedeckt.

## Patentansprüche

1. Verfahren zum Anbringen einer Schnecke an einer Ankerwelle eines Ankers eines Elektromotors, **dadurch gekennzeichnet, daß** die Schnecke (30) am Ende des Zusammenbaus des Ankers (10) aus seinen Einzeiteilen (12, 14, 18, 20, 26) durch Umformen der Ankerwelle (12) hergestellt wird.

2. Verfahren nach Anspruch 1, **dadurch gekennzeichnet, daß** die Schnecke (30) durch Walzen hergestellt wird.

3. Verfahren nach Anspruch 1, **dadurch gekennzeichnet, daß** vor Herstellung der Schnecke (30) ein rohrförmiger Lagersitz (26) zwischen auf die Ankerwelle (12) aufgesetzten Einzelteilen (14, 18, 20) des Ankers (10) und der herzustellenden Schnecke (30) auf die Ankerwelle (12) aufgebracht wird, wobei ein Außendurchmesser des Lagersitzes (26) mindestens so groß wie ein Außendurchmesser der herzustellenden Schnecke (30) ist.

4. Verfahren nach Anspruch 1, **dadurch gekennzeichnet, daß** vor Herstellung der Schnecke (30) ein Wellenlager (28) zwischen auf die Ankerwelle (12) aufgesetzten Einzelteilen (14, 18, 20) des Ankers (10) und der herzustellenden Schnecke (30) auf die Ankerwelle (12) aufgebracht wird.

5. Anker hergestellt nach dem Verfahren nach einem der Patentansprüche 1 bis 4 für einen Elektromotor, mit einer Ankerwelle, die eine Schnecke aufweist, die mit der Ankerwelle einstückig ist, **dadurch gekennzeichnet, daß** die Schnecke (30) einen größeren Außendurchmesser als die Ankerwelle (12) auf ihrer übrigen Länge aufweist.

6. Anker nach Anspruch 5, **dadurch gekennzeichnet, daß** auf der Ankerwelle (12) zwischen der Schnecke (30) und auf die Ankerwelle (12) aufgesetzten Einzelteilen (14, 18, 20) des Ankers (10) ein rohrförmiger Lagersitz (26) angebracht ist, dessen Außendurchmesser mindestens so groß wie ein Außendurchmesser der Schnecke (30) ist.

7. Anker nach Anspruch 5, **dadurch gekennzeichnet, daß** ein Wellenlager (28) zwischen der Schnecke (30) und auf die Ankerweile (12) aufgesetzten Einzelteilen (14, 18, 20) des Ankers (10) unmittelbar auf der Ankerwelle (12) angebracht ist.

## Claims

1. Method of fitting a worm to an armature shaft of an armature of an electric motor, **characterized in that** the worm (30) is produced by shaping the armature shaft (12) at the end of the assembly of the armature (10) from its individual parts (12, 14, 18, 20, 26).

2. Method according to Claim 1, **characterized in that** the worm (30) is produced by rolling.

3. Method according to Claim 1, **characterized in that** before production of the worm (30), a tubular bearing seat (26) is fitted to the armature shaft (12), between individual parts (14, 18, 20) of the armature (10) put onto the armature shaft (12) and the worm (30) to be produced, an external diameter of the bearing seat (26) being at least as large as an external diameter of the worm (30) to be produced.

4. Method according to Claim 1, **characterized in that** before production of the worm (30), a shaft bearing (28) is fitted to the armature shaft (12), between individual parts (14, 18, 20) of the armature (10) put onto the armature shaft (12) and the worm (30) to be produced.

5. Armature produced in accordance with the method according to any of Claims 1 to 4 for an electric motor, having an armature shaft which has a worm which is in one piece with the armature shaft, **characterized in that** the worm (30) has a greater external diameter than the armature shaft (12) over the remaining length of the latter.

6. Armature according to Claim 5, **characterized in that** on the armature shaft (12), between the worm (30) and individual parts (14, 18, 20) of the armature (10) put onto the armature shaft (12), there is fitted a tubular bearing seat (26), whose external diameter is at least as large as an external diameter of the worm (30).

7. Armature according to Claim 5, **characterized in that** a shaft bearing (28) is fitted directly to the armature shaft (12), between the worm (30) and individual parts (14, 18, 20) of the armature (10) put onto the armature shaft (12).

## Revendications

1. Procédé pour fixer une vis sans fin sur l'arbre d'un induit d'un moteur électrique,
**caractérisé en ce qu'**
on réalise la vis sans fin (30) à la fin de l'assemblage de l'induit (10) composé de ses différentes pièces séparées (12, 14, 18, 20, 26) par mise en forme de l'arbre (12) de l'induit.

2. Procédé selon la revendication 1,
**caractérisé en ce qu'**
on réalise la vis sans fin (30) par laminage.

3. Procédé selon la revendication 1,
**caractérisé en ce qu'**
avant de réaliser la vis sans fin (30) on monte un siège de palier (26) tubulaire entre les différentes pièces séparées (14, 18, 20) de l'induit (10) installées sur l'arbre d'induit (12) et la vis sans fin (30) à réaliser sur l'arbre (12) de l'induit, le diamètre extérieur du siège de palier (26) étant au moins aussi grand que le diamètre extérieur de la vis sans fin (30) à réaliser.

4. Procédé selon la revendication 1,
**caractérisé en ce qu'**
avant de réaliser la vis sans fin (30) on place un palier d'arbre (28) entre les différentes pièces séparées (14, 18, 20) de l'induit (10)0 à monter sur l'arbre (12) et la vis sans fin (30) à réaliser sur l'arbre (12) de l'induit.

5. Induit réalisé selon le procédé de l'une des revendications 1 à 4 pour un moteur électrique comportant un arbrc d'induit muni d'une vis sans fin réalisée en une seule pièce avec l'arbre de l'induit,
**caractérisé en ce que**
la vis sans fin (30) a un diamètre extérieur plus grand que l'arbre d'induit (12) sur la partie restante de sa longueur.

6. Induit selon la revendication 5,
**caractérise en ce qu'**
il comporte un siège de palier (26) tubulaire sur l'arbre (12) entre la vis sans fin (30) et les pièces séparées (14, 18, 20) de l'induit (10) installé sur l'arbre (12), le diamètre extérieur du siège de palier étant au moins aussi grand que le diamètre extérieur de la vis (30).

7. Induit selon la revendication 5,
**caractérisé en ce qu'**
un palier d'arbre (28) est installé entre la vis sans fin (30) et les pièces séparées (14, 18, 20) de l'induit (10) installé sur l'arbre (12), ce palier étant installé directement sur l'arbre d'induit (12).
